# EUROPEAN PATENT SPECIFICATION

(11) **EP 4 383 253 B1**
(45) Date of publication and mention of the grant of the patent: **09.09.2026**
(21) Application number: 23214560.7
(22) Date of filing: 06.12.2023
(51) Int. Cl.: G10L 15/22, G10L 25/78, G10L 15/00, G10L 25/51, G10L 21/0208, G10L 21/0216

(54) **RELEVANCE BASED SOURCE SELECTION FOR FAR-FIELD VOICE SYSTEMS**
RELEVANZBASIERTE QUELLENAUSWAHL FÜR FERNFELDSPRACHSYSTEME
SÉLECTION DE SOURCE BASÉE SUR LA PERTINENCE POUR DES SYSTÈMES VOCAUX EN CHAMP LOINTAIN

(30) Priority: 07.12.2022 US 202218077180
(43) Date of publication of application: 12.06.2024
(73) Proprietor: Avago Technologies International Sales Pte. Limited, Singapore 768923 (SG)
(72) Inventor: Saifee, Qutubuddin, 560103 Bengaluru (IN); Annadana, Raghuram, 560102 Bangalore (IN); Shripad, Sunil, 560103 Bangalore (IN); Singhal, Manoj, 560103 Bengaluru (IN)
(74) Representative: Bosch Jehle Patentanwaltsgesellschaft mbH

(56) References cited:
- US-A1- 2022 148 592

## Description

The present description relates generally to data communications hardware including, for example, audio source selection in far-field voice (FFV) systems for applications such as automatic speech recognition (ASR) and voice and/or video calling based on source content relevance.

FFV recognition systems are designed to recognize voice in a noisy environment based on speaker localization using a microphone array. In some instances, an FFV system is designed to detect a wake word, or trigger word, and determine a command from speech following the wake word. However, due to the nature of the FFV system, a user is often relatively far from the FFV system, thus reducing the amplitude at which the FFV system receives the user's voice command. Additionally, other noises (e.g., background noise, music, television) are picked up by the microphone array. These noises often create challenges in determining which audio signal is relevant (i.e., the speech or the noise) and whether the audio signal should be further processed/used.

The invention is as defined by the appended claims.

### BRIEF DESCRIPTION OF THE DRAWINGS

Certain features of the subject technology are set forth in the appended claims. However, for purposes of explanation, several aspects of the subject technology are depicted in the following figures.
FIG. 1 illustrates a block diagram illustrating an example of a system for automatic speech recognition and voice and/or video calling, according to aspects of the subject technology.
FIG. 2 illustrates a schematic diagram illustrating an example implementation of a source selection module, according to aspects of the subject technology.
FIG. 3 illustrates a flow diagram illustrating an example of an implementation of relevance factor aggregation, according to aspects of the subject technology.
FIG. 4 illustrates a flow diagram illustrating an example of a method for managing audio signals, according to aspects of the subject technology.
FIG. 5 illustrates an example of an electronic device, in accordance with one or more implementations of the subject technology,

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, the subject technology is not limited to the specific details set forth herein and may be practiced using one or more implementations. In one or more instances, structures and components are shown in block-diagram form in order to avoid obscuring the concepts of the subject technology.

According to some aspects, the subject technology is directed to electronic devices with source separation systems that receive and separate multiple audio signals into audio streams, and source selection systems that determine, based upon relevant characteristics or information associated with one or more applications, whether each audio stream is relevant for a particular application. An "audio stream" may refer to a processed (e.g., by a source separation system) audio signal. Exemplary applications include ASR and voice and/or video calling (VVC). In some instances, the applications are associated with end user applications. Exemplary electronic devices include appliances such as a set top box (STB), also known as a cable box, and a home assistant (e.g., smart home assistant). ASR includes recognizing and determining user speech, which may include commands or questions/queries for the device, as well as responses to questions/queries from the device. VVC includes two-way calls between users or conference calls among multiple parties, using either voice only or voice and video.

Devices described herein often involve long distances between the user and the device, such as several feet between the user and the device in a room. Accordingly, devices described herein are characterized as FFV systems. Due to the nature of the distance between the user and the device, enabling ASR and VVC in real-world scenarios, with the user being far from the device, involves handling scenarios where voice commands are spoken in environments ranging from a relatively silent environment to a noisy environment. Regarding the latter, the noise may be due to background sounds, for example, music being played or other people talking. The background sounds can interfere with the desired speech and degrade the performance of ASR and VVC application.

FFV systems described herein are designed to improve ASR and VVC performance in such real-world scenarios by reducing the impact of interfering sounds and enhancing voice or the intended source audio. An FFV process can be broken into two stages, namely, source separation and source selection. For example, source separation stage takes N audio inputs or audio signals (from various audio sources) captured by N microphones of a microphone array and separates the audio inputs into M (e.g., less than or equal to N) different output audio streams. It should be noted that N and M are each positive integers. Each audio stream is expected to contain audio from a different source with higher clarity. Then, the source selection stage uses the M separated source streams as inputs and maps the source streams as an output for an application (e.g., ASR or VVC), based on relevancy of the audio stream with respect to the application. The sequence of source separation and source selection stages is decided based on the FFV process. Alternatively, an FFV system may use processes that perform source separation and source selection using an integrated process thereby performing joint source separation and source selection.

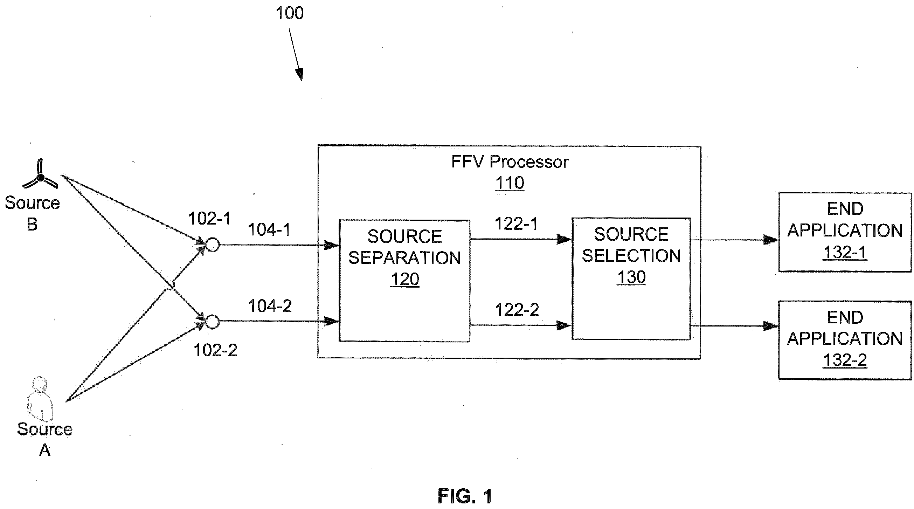

FIG. 1 illustrates a block diagram illustrating an example of a system 100. As non-limiting examples, the system 100 may include an STB, an electronic device, or a home assistant. In this regard, the system 100 is designed to understand spoken language, distinguish intended use(s) of language, such as commands and queries, respond by using a spoken language (e.g., English), playing music or other sounds, or performing other functions such as turning a device on or off, and/or enable voice and video communication. Different intended uses of language may include general conversational language that does not involves commands and/or queries.

The system 100 includes a microphone 102-1 and a microphone 102-2. The microphones 102-1 and 102-2 are representative of an array of N microphones of the system 100. The system 100 further includes an FFV processor 110. The FFV processor 110 may include a source separation module 120 and a source selection module 130. The source separation module 120 and the source selection module 130, as well as other modules described herein, may include one or more algorithms stored on memory and executable by controller circuitry (e.g., microcontrollers, MEMS controllers, digital signal processors, application-specific integrated circuits, central processing unit). Other components or processors not shown for simplicity.

The microphones 102-1 and 102-2 can capture audio from a number (e.g., M less than or equal to N) of sources. As shown, microphones 102-1 and 102-2 capture audio from a Source A (e.g., a person) and a source B (e.g., a device such as a fan or another person). Based on the sources (e.g., Source A and Source B), the microphone 102-1 and the microphone 102-2 generate an audio signal 104-1 and an audio signal 104-2, respectively. Each of the audio signals 104-1 and 104-2 includes components from both Source A and Source B. The source separation module 120 receives and separates the audio signals 104-1 and 104-2 into an audio stream 122-1 and an audio stream 122-2. Through a de-mixing, weighting, and/or beamforming process provided by the source separation module 120, the audio streams 122-1 and 122-2 may contain audio signals from each source but with higher clarity from one of the sources (e.g., Source A or Source B). For example, the audio stream 122-1 may correspond to Source A while the audio stream 122-2 may correspond to Source B.

The source selection module 130 receives the audio streams 122-1 and 122-2 from the source separation module 120 as inputs and maps each of the audio streams 122-1 and 122-2 as output to an application. As shown, the audio stream 122-1 is mapped to an application 132-1 and the audio stream 122-2 is mapped to an application 132-2. Each application includes various characteristics. In this regard, the source selection module 130 determines whether an audio stream would be used with the application, based on several relevance factors discussed below. For example, the source selection module 130 may determine the audio stream 122-1 is more relevant to an ASR application, and may also determine the audio stream 122-2 more relevant to a VVC application. Accordingly, audio signals (e.g., audio signals 104-1 and 104-2) can be categorized as to whether each of the audio signals is relevant to a particular application.

While the above example shows two audio sources captured by two microphones, in other embodiments, the FFV processor 110 takes N audio inputs captured by N microphones in a microphone array and separates audio from different sources into M (e.g., less than or equal to N) different output audio streams. Accordingly, the number of microphones and sources can vary.

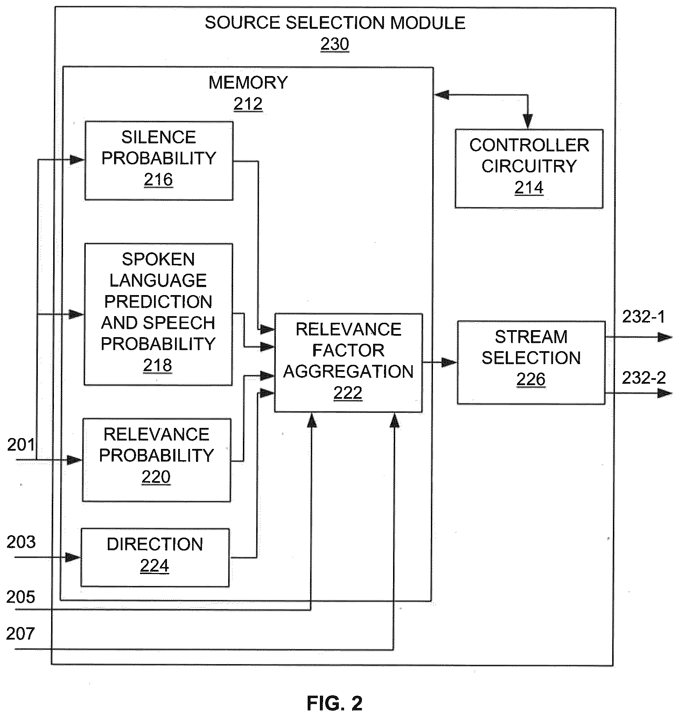

FIG. 2 illustrates a schematic diagram illustrating an example implementation of a source selection module 230. The source selection module 230 may be included in an integrated circuit used in a system (e.g., system 100 of FIG. 1). As shown, the source selection module 230 includes a memory 212 (e.g., read-only memory and/or random-access memory) that stores executable instructions. The executable instructions may include steps used to evaluate the probability of one or more characteristics in an audio stream as well as determine the relevance of one or more audio streams with respect to an application, as described herein. Also, while the memory 212 is shown as being integrated with the source selection module, the memory 212 may be stored externally with respect to the source selection module 230.

The source selection module 230 may further include controller circuitry 214. The controller circuitry 214 may include a MEMS controller, an application-specific integrated circuit, and/or one or more microcontrollers, as non-limiting examples. The controller circuitry 214 is operatively coupled to the memory 212, and as a result, can receive and carry out instructions, or steps, stored on the various blocks of memory 212 described below.

The source selection module 230 can receive and analyze audio streams 201. The audio streams 201 may be received as separated audio streams (e.g., audio streams 122-1 and 122-2) separated by a source separation module.

As discussed herein, the source selection module 230 includes several probability modules (e.g., algorithms, computational blocks) stored on the memory 212 and designed to determine the probability of a characteristic present in an audio stream. When the determined probability of the characteristic present in the audio stream is at or above a threshold probability (e.g., a probability selected within a range of 0.5 to 0.9, or similarly 50% to 90%), a determination is made that the characteristic is present in the audio stream.

The source selection module 230 includes a silence probability computation module 216. The silence probability computation module 216 can receive each of the audio streams 201 and distinguish between low background noise (including silence) and the presence of sound (not silent). The silence probability computation module 216 is designed to determine a probability of silence (or lack of noise) associated relatively low or no background noise. Thus, the silence probability computation module 216 can determine the probability of a characteristic (e.g., silence or low background noise) present in an audio stream.

A probability of silence may be relevant to certain applications. For example, in ASR applications, some form of speech is expected, and accordingly, when an audio stream is determined to be either silent or low background noise, then the silence probability computation module 216 determines the audio stream is not relevant to ASR.

The source selection module 230 includes a spoken language prediction and speech probability computation module 218. The spoken language prediction and speech probability computation module 218 can receive each of the audio streams 201 and distinguish between the presence of spoken language and general noise, music, unrecognizable speech. Additionally, the spoken language prediction and speech probability computation module 218 can distinguish between one dialect (e.g., English, Spanish, French, etc.) from other dialects. Thus, the spoken language prediction and speech probability computation module 218 can determine the probability of a characteristic (e.g., spoken language probability) present in an audio stream, and separately, can determine the probability of an additional characteristic (e.g., dialect probability) present in an audio stream.

A determination of noise versus spoken language may be relevant to certain applications. For example, in ASR applications, some form of speech is expected, and accordingly, when an audio stream is determined to include noise, then the spoken language prediction and speech probability computation module 218 determines the audio stream is not relevant to ASR. Conversely, when an audio stream is determined to include speech (i.e., spoken language), then the spoken language prediction and speech probability computation module 218 to determine that the audio stream is relevant to ASR. In another example, for an ASR application expecting speech in the form of a predetermined dialect, such as English language, a command or query based on speech other than in the English language causes the spoken language prediction and speech probability computation module 218 determines the audio stream is not relevant to ASR, while a command or query in English language is relevant to ASR.

The source selection module 230 includes a relevance probability computation module 220. The relevance probability computation module 220 can receive each of the audio streams 201 and distinguish between language suitable for (i.e., commonly used with) an application and other general language. Thus, the relevance probability computation module 220 can determine the probability of a characteristic present in an audio stream. For ASR applications, the relevance probability computation module 220 can determine the probability of words or phrases associated with a wake word(s), commands, queries, questions, or responses to questions. For VVC applications, the relevance probability computation module 220 can determine the probability of general words spoken in conversation, which may include words or phrases (e.g., "Hi" or "Nice to hear your voice").

A determination of words suitable for a particular application may be relevant to certain applications. For example, when an audio stream includes language associated with commands or queries, the relevance probability computation module 220 can determine the audio stream is relevant for ASR applications. Conversely, when an audio stream includes language associated with general language or language usually used in human conversations, the relevance probability computation module 220 can determine the audio stream is not relevant for ASR applications but is relevant for relevant for VCC applications. Accordingly, the relevance probability computation module 220 can determine whether there is intent for speech directed to a particular application. Additionally, the relevance probability computation module 220 may include machine learning capabilities, allowing the relevance probability computation module 220 to learn over time what is appropriate for each application, and perform relevancy determinations without explicit instruction.

The source selection module 230 includes a relevance factor aggregation module 222. The relevance factor aggregation module 222 receives information (e.g., probability information) from each of the silence probability computation module 216, the spoken language prediction and speech probability computation module 218, and the relevance probability computation module 220. Based on the received information, the relevance factor aggregation module 222 can determine a weighted sum of probabilities or an average probability (from the three received probabilities) and determine whether each of the audio streams 201 is relevant for a particular application once the relevant factors for one or more application(s) is/are received. This will be discussed further below.

The relevance factor aggregation module 222 can receive additional information to improve the accuracy of determine the appropriate application. For example, the relevance factor aggregation module 222 can receive a direction 224 of the source of the audio signal separated into an audio stream. The direction input is a direction indicator generated based on separation weights 203, which are also referred to as de-mixing weights and are obtained from a multisource processor in the source separation module 120 of FIG. 1. Using a microphone array (e.g., microphones 102-1 and 102-2 of FIG. 1), the relevance factor aggregation module 222 can determine an angle of the source of the audio signal relative to the microphone array. Moreover, the information provided by the direction 224 can provide an indication to relevance factor aggregation module 222 whether the sources (e.g., Source A and Source B of FIG. 1) are moving relative to the microphone array. As an example, if two sources switch places in a room, the information provided by the direction 224 can provide an indication to the relevance factor aggregation module 222 that the sources have switched places. As a result, if the relevance factor aggregation module 222 previously determined two sources, at respective angles, were relevant to respective applications, the relevance factor aggregation module 222 can swap and reassign the resultant audio streams (from the two sources) to the applications.

Additionally, the relevance factor aggregation module 222 can receive echo strength 205 associated with soundwaves (e.g., acoustical energy) generated by a speaker(s) of a system (that includes the source selection module 230) and subsequently received by a microphone array of the system. For example, when the system takes the form of a home assistant that can play audio files (e.g., music), the audio output of an audio file can be received by the microphone array. The relevance factor aggregation module 222 can determine whether the audio stream is caused by feedback from the speaker(s) of the system or not, and in case it is feedback, the relevance factor aggregation module 222 will give the feedback a low (e.g., zero or close to zero) weight. Put another way, the relevance factor aggregation module 222 can effectively cancel or ignore the contribution of audio related to the feedback.

Also, the relevance factor aggregation module 222 can receive an application identification 207. For each application, the application identification 207 can provide the relevance factor aggregation module 222 with relevance information (e.g., instructions) as to how relevant, or how much weight to give to, a characteristic (when the probability-based models determine the characteristic is present). For example, the application identification 207 can indicate to the relevance factor aggregation module 222 that, for an ASR application, speech associated with any of wake words, commands (e.g., "turn the volume up" or "turn the channel to channel 192"), and queries (e.g., "What is the weather supposed to be like today?") is of relatively high relevance and noise or speech associated with general words (e.g., basic conversation) are of relatively low relevance. Thus, the characteristics associated with ASR are weighed more heavily, and audio streams with these characteristics present, as determined by the probabilities, may be determined to be associated with ASR. Also, the application identification 207 can indicate to the relevance factor aggregation module 222 that, for a VVC application, speech associated with general words or language associated with human conversations are of relatively high relevance, and speech associated with commands and queries are of relatively low relevance. Thus, the characteristics associated VVC are weighed more heavily, and audio streams with these characteristics present, as determined by the probabilities, may be determined to be associated with VVC.

Accordingly, the relevance factor aggregation module 222 receives, from the probability computations, respective probabilities of the presence of a characteristic (e.g., silence, spoken language, relevance) in each audio stream of the audio streams 201, and also receives information from the application identification 207 as to what is relevant for each application. The relevance factor aggregation module 222 compares the received relevance information, based on the application identification 207, against the characteristics in the audio streams (provided the probability of the presence of the characteristic(s) indicates the characteristics are present). Accordingly, the relevance factor aggregation module 222 relies on several factors to make a decision, as opposed to using a single factor. This may be particularly beneficial in FFV applications when audio signals related to intended language is competing with noise and other sounds in a room. Also, as a result of determining whether each of the audio streams 201 are relevant to a particular application, it can be determined whether an audio source associated with an audio stream(s) is relevant to a particular application.

The source selection module 230 includes a stream selection module 226. For each audio stream of the audio streams 201, the relevance factor aggregation module 222 indicates to the stream selection module 226 the audio stream to which application is relevant. The stream selection module 226 can map an audio stream to an application. As shown, the stream selection module 226 maps an audio stream to an application 232-1 and another audio stream to an application 232-2, which may be a different application than the application 232-1. Accordingly, the audio streams are provided by the source selection module 230 to the appropriate application.

In some implementations, the ASR and/or VVC applications may be cloud-based or can be implemented within a system that includes the source selection module 230.

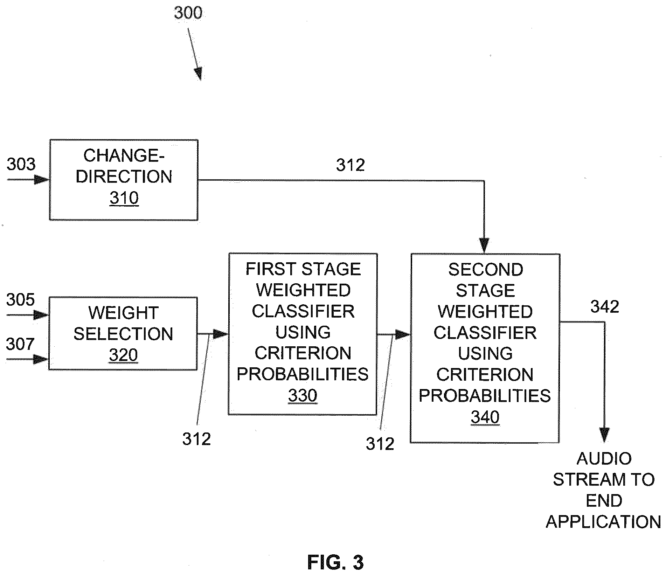

FIG. 3 illustrates a flow diagram illustrating an example of an implementation 300 of relevance factor aggregation, according to aspects of the subject technology. The implementation 300 may occur on control circuitry (e.g., one or more processors) of a source selection system described herein. According to the implementation 300, the relevance factor aggregation process includes a change-direction detection processor 310, a weight selection processor 320, a first stage weighted classifier 330 and a second stage weighted classifier 340. The change-direction detection processor 310 detects a change in the direction of the source in the audio streams received from the source separation module (in other words, change in source to-stream mapping) and provides a first indicator 312 based on a direction indicator 303, which is provided by directional information (e.g., direction 224 of FIG. 2). The weight selection processor 320 selects weighting factors, to be applied to the probabilities discussed above with respect to FIG. 2, based on an echo strength signal 305 and application identification 307.

The first stage weighted classifier 330 computes a first stage weighted classification based on selected weights from the weight selection processor 320. The second stage weighted classifier 340 provides an output 342 to an audio-stream selection processor (e.g., stream selection 226 of FIG. 2) for audio stream to application mapping based on the first stage weighted classifier 330, and the first indicator 312 from the change-direction detection processor 310.

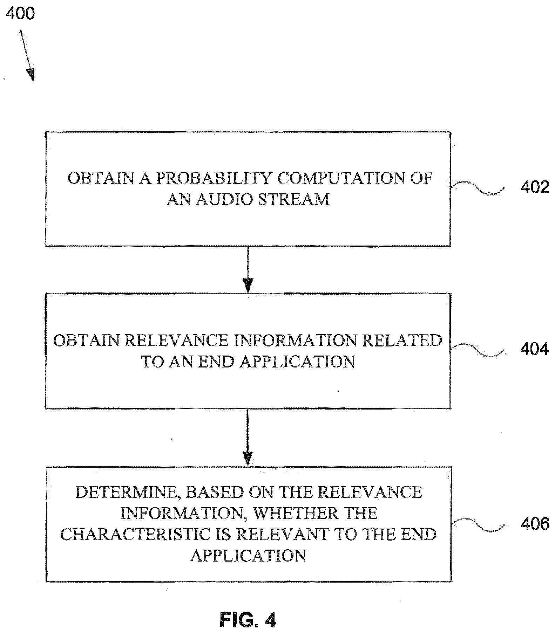

FIG. 4 illustrates a flow diagram illustrating an example of a method 400. The method 400 may be carried out by a system that includes a source selection module described herein.

In step 402, a probability of a presence of a characteristic in an audio stream is obtained. The audio stream may be obtained by a microphone or microphone array of an electronic device that includes the integrated circuit. A probability computation may be performed by at least one of a silence probability computation module, a spoken language prediction and speech probability computation module, and a relevance probability computation module. In some embodiments, a respective probability is obtained by each of the probability computation modules.

In step 404, obtaining relevance information related to an application. Example applications include ASR and VVC. Example relevance information for ASR applications includes wake word(s), commands, queries, questions, or responses to questions. Example relevance information for VVC applications includes general words spoken in conversation, which may include words or phrases other than a wake word(s), commands, or queries.

In step 406, in response to the probability indicating the characteristic is present, an indication is provided that the audio stream is relevant to the application based on a comparison between the characteristic and the relevance information. The indication may be provided to a stream selection module. For example, a relevance factor aggregation module can notify the stream selection module that the audio stream is relevant for the application. It should be noted that the method 400 can be used for several audio signals separated into several audio streams and several applications can be received. In this regard, the method 400 can determine which audio stream(s) is/are relevant to which application(s).

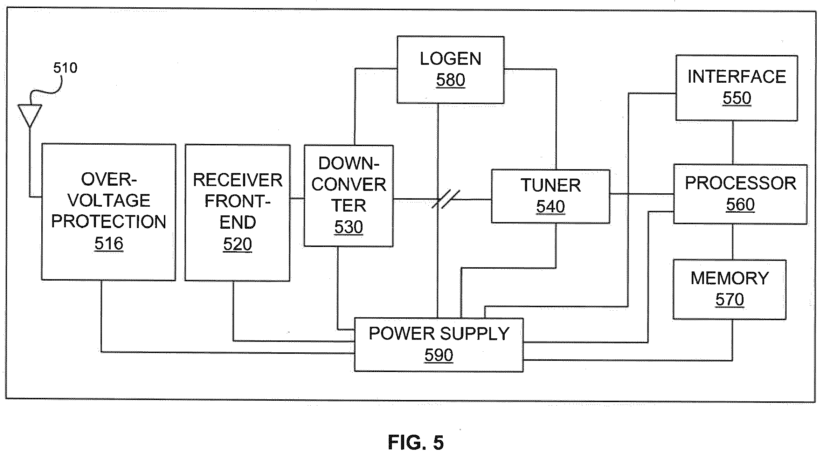

FIG. 5 illustrates an example of an electronic device 500, in accordance with one or more implementations of the subject technology. The electronic device 500 may include an electronic device such as a STB (e.g., cable box) or a home assistant. The electronic device 500 may include a feed 510 coupled to a satellite antenna, a receiver front-end 520, a down-converter 530, a tuner 540, a processor 550, an interface 560, a memory 570, a local oscillator generator (LOGEN) 580, a power supply 590, and an overvoltage protection device 595. In various embodiments of the subject technology, the electronic device 500 may include other processors or components not shown here for simplicity. One or more of the blocks represented in FIG. 5 may be integrated on one or more semiconductor substrates. For example, the blocks 520-580 may be realized in a single chip or a single system on a chip, or may be realized in a multi-chip chipset.

The feed 510 may be suitable for receiving broadband signals (e.g., satellite signals) over a wide range of frequencies. Although a single feed 510 is illustrated, the subject technology is not so limited. The downconverter 530 may comprise suitable logic, circuitry, interfaces, and/or code that can use local oscillator (LO) signals generated by the LO generator (LOGEN) 580 to down-convert the satellite signals (e.g., at 12 GHz) to radiofrequency (RF) signals (e.g., at 950-2150 MHz). The tuner 540 may comprise suitable logic, circuitry, interfaces, and/or code that can use proper LO signals generated by the LOGEN 580 to down-convert the RF signals and to generate baseband signals.

The processor 550 may comprise suitable logic, circuitry, and/or code that may enable processing data and/or controlling operations of the electronic device 500. In this regard, the processor 550 may be enabled to provide control signals to various other portions of the electronic device 500. The processor 550 may also control transfers of data between various portions of the electronic device 500. Additionally, the processor 550 may enable implementation of an operating system or otherwise execute code to manage operations of the electronic device 500.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its), and vice versa. Headings and subheadings, if any, are used for convenience only, and do not limit the subject disclosure.

The predicate words "configured to", "operable to", and "programed to" do not imply any particular tangible or intangible modification of a subject, but, rather, are intended to be used interchangeably. For example, a processor configured to monitor and control an operation or a component, may also mean the processor being programed to monitor and control the operation or the processor being operable to monitor and control the operation. Likewise, a processor configured to execute code can be construed as a processor programed to execute code, or operable to execute code.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

A phrase such as an "aspect" does not imply that such aspect is essential to the subject technology, or that such aspect applies to all configurations of the subject technology.
A disclosure relating to an aspect may apply to all configurations, or one or more configurations. A phrase such as an "aspect" may refer to one or more aspects, and vice versa. A phrase such as a "configuration" does not imply that such configuration is essential to the subject technology, or that such configuration applies to all configurations of the subject technology. A disclosure relating to a configuration may apply to all configurations, or one or more configurations. A phrase such as a "configuration" may refer to one or more configurations, and vice versa.

The word "example" is used herein to mean "serving as an example or illustration." Any aspect or design described herein as "example" is not necessarily to be construed as preferred or advantageous over other aspects or designs.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

## Claims

1. An integrated circuit for an electronic device (500), the integrated circuit comprising:
a memory (212, 570) that stores instructions; and
controller circuitry (214) coupled to the memory (212, 570), wherein executing the instructions causes the controller circuitry (214) to:
obtain, from a microphone array (102-1, 102-2), multiple audio signals (104-1, 104-2);
obtain, from the multiple audio signals (104-1, 104-2), a plurality of audio streams (122-1, 122-2, 201);
obtain a probability of a presence of an audio characteristic in one or more of the multiple audio signals (104-1, 104-2);
obtain relevance information related to an application (132-1, 132-2, 232-1, 232-2) as to how much relevance or how much weight to give to the characteristic; and
in response to the probability indicating the presence of the characteristic, provide an indication whether the one or more of the plurality of audio signals (104-1, 104-2) is relevant to the application (132-1, 132-2, 232-1, 232-2); **characterized in that** executing the instructions further causes the controller circuitry (214) to:
obtain a plurality of probabilities of the presence of a characteristic in the plurality of audio streams (122-1, 122-2, 201);
if the plurality of probabilities of the presence of the characteristic indicates the characteristic is present, compare the received relevance information against the characteristics present in the plurality of audio streams (122-1, 122-2, 201);
determine whether one or more of the plurality of audio streams (122-1, 122-2, 201) are relevant to a particular application (132-1, 132-2, 232-1, 232-2);
determine whether an audio source (A, B) associated with the one or more of the plurality of audio streams (122-1, 122-2, 201) is relevant to the particular application (132-1, 132-2, 232-1, 232-2); and
in response to the one or more of the plurality of audio streams (122-1, 122-2, 201) or the audio source (A, B) being relevant to the particular application (132-1, 132-2, 232-1, 232-2), provide the one or more of the plurality of audio streams (122-1, 122-2, 201) to the particular application (132-1, 132-2, 232-1, 232-2).

2. The integrated circuit of claim 1, wherein in response to the probability being greater than a threshold probability, determine the characteristic is present in the plurality of audio streams (122-1, 122-2, 201).

3. The integrated circuit of any preceding claim, further comprising:
a spoken language prediction and speech probability computation module (218) configured to determine the probability of the characteristic, and separately, the probability of an additional characteristic present in the plurality of audio streams (122-1, 122-2, 201);
and
the characteristic comprises speech.

4. The integrated circuit of any preceding claim, wherein:
the application (132-1, 132-2, 232-1, 232-2) comprises automatic speech recognition; and
the speech comprises a command or a query.

5. The integrated circuit of any preceding claim, further comprising:
a relevance probability computation module (220) configured to determine the probability of the characteristic present in the plurality of audio streams (122-1, 122-2, 201);
the relevance probability computation module (220) being configured to distinguish between language suitable for an application (132-1, 132-2, 232-1, 232-2) and other general language; and/or
the relevance probability computation module (220) being configured to determine whether there is intent for speech directed to a particular application (132-1, 132-2, 232-1, 232-2).

6. The integrated circuit of any preceding claim, further comprising:
a silence probability computation module (216) configured to receive the plurality of audio streams (122-1, 122-2, 201) and determine a probability of silence by distinguishing between background noise and a presence of sound and to determine the probability of the characteristic present in the plurality of audio streams (122-1, 122-2, 201).

7. The integrated circuit of claim 6, further comprising:
a source selection module (230) including a relevance factor aggregation module (222) configured to determine whether the plurality of audio streams (122-1, 122-2, 201) is caused by feedback from a loudspeaker or not; and
in case the plurality of audio streams (122-1, 122-2, 201) is caused by feedback from a loudspeaker,
the relevance factor aggregation module (222) is configured to give the feedback a low weight.

8. The integrated circuit of any preceding claim, wherein:
executing the instructions further causes the controller circuitry (214) to obtain, using the microphone array (102-1, 102-2), a direction (224) of the audio signals (104-1, 104-2), and
the direction (224) comprises an angle with respect to the microphone array (102-1, 102-2).

9. The integrated circuit of any preceding claim, wherein executing the instructions further causes the controller circuitry (214) to:
obtain a second probability of a second characteristic present in the audio signals (104-1, 104-2), the second characteristic being different from the characteristic,
obtain second relevance information related to the application (132-1, 132-2, 232-1, 232-2); and
in response to the second probability indicating the presence of the second characteristic, provide the indication whether the audio signals (104-1, 104-2) is relevant to the application (132-1, 132-2, 232-1, 232-2) based upon a second comparison between the second characteristic and the second relevance information.

10. The integrated circuit of any preceding claim, wherein executing the instructions further causes the controller circuitry (214) to provide the indication to a stream selection module (226) configured to map the audio signals (104-1, 104-2) to the application (132-1, 132-2, 232-1, 232-2).

11. The integrated circuit of claim 10, when depending on claim 7, wherein:
the relevance factor aggregation module (222) is further configured to receive probability information from each of the silence probability computation module (216), the spoken language prediction and speech probability computation module (218) and the relevance probability computation module (220); wherein
the relevance factor aggregation module (222) is configured to determine, based on the received information, a weighted sum of probabilities or an average probability from the received probabilities, to determine whether each of multiple audio streams (122-1, 122-2, 201) is relevant for a particular application (132-1, 132-2, 232-1, 232-2), and to indicate to the stream selection module (226) the audio stream (122-1, 122-2, 201) to which the particular application (132-1, 132-2, 232-1, 232-2) is relevant.

12. The integrated circuit of any preceding claim, wherein executing the instructions further causes the controller circuitry (214) to cancel feedback related to echo strength from an audio file played on a speaker of the electronic device (500).

13. The integrated circuit of any preceding claim, further comprising: a weight selection processor (320) configured to select weighting factors, to be applied to the probability of a presence of a characteristic in the plurality of audio streams (122-1, 122-2, 201), based on an echo strength signal (305) and an application identification (307).

14. A computer-implemented method comprising:
obtaining, from multiple audio signals (104-1, 104-2), a plurality of audio streams (122-1, 122-2, 201);
obtaining a probability of a presence of an audio characteristic in one or more of the plurality of the audio streams (122-1, 122-2, 201);
obtaining relevance information related to an application (132-1, 132-2, 232-1, 232-2) as to how much relevance or how much weight to give to the characteristic;
in response to the probability indicating the characteristic is present, determining whether the one or more of the plurality of audio streams (122-1, 122-2, 201) is relevant to the application (132-1, 132-2, 232-1, 232-2); **characterized by** obtaining a plurality of probabilities of the presence of a characteristic in the plurality of audio streams (122-1, 122-2, 201); wherein
if the plurality of probabilities of the presence of the characteristic indicates the characteristic is present, comparing the received relevance information against the characteristics present in the plurality of audio streams (122-1, 122-2, 201);
determining whether the one or more of the plurality of audio streams (122-1, 122-2, 201) are relevant to a particular application (132-1, 132-2, 232-1, 232-2);
determining whether an audio source (A, B) associated with the one or more of the plurality of audio streams (122-1, 122-2, 201) is relevant to a particular application (132-1, 132-2, 232-1, 232-2); and
in response to the one or more of the plurality of audio streams (122-1, 122-2, 201) or the audio source (A, B) being relevant to the particular application (132-1, 132-2, 232-1, 232-2), providing the one or more of the plurality of audio streams (122-1, 122-2, 201) to the particular application (132-1, 132-2, 232-1, 232-2).

15. The computer-implemented method of claim 14, further comprising:
obtaining a second probability of a presence of a second characteristic in the plurality of audio streams (122-1, 122-2, 201);
obtaining a third probability of a presence of a third characteristic in the plurality of audio streams (122-1, 122-2, 201); and
in response to the second characteristic and the third characteristic being present and the plurality of audio streams (122-1, 122-2, 201) being relevant to the application (132-1, 132-2, 232-1, 232-2), providing the audio stream (122-1, 122-2, 201) to the application (132-1, 132-2, 232-1, 232-2).

## Patentansprüche

1. Integrierte Schaltung für eine elektronische Vorrichtung (500), wobei die integrierte Schaltung umfasst:
einen Speicher (212, 570), der Befehle speichert; und
eine mit dem Speicher (212, 570) gekoppelte Steuerschaltung (214), wobei die Ausführung der Befehle bewirkt, dass die Steuerschaltung (214):
aus einem Mikrofonarray (102-1, 102-2) multiple Audiosignale (104-1, 104-2) erhält;
aus den multiplen Audiosignalen (104-1, 104-2) eine Vielzahl von Audioströmen (122-1, 122-2, 201) erhält;
eine Wahrscheinlichkeit für das Vorhandensein eines Audio-Merkmals in einem oder mehreren der multiplen Audiosignale (104-1, 104-2) erhält;
Relevanzinformationen in Bezug auf eine Anwendung (132-1, 132-2, 232-1, 232-2) darüber erhält, wie viel Relevanz oder wie viel Gewicht dem Merkmal beizumessen ist; und
als Reaktion auf die Wahrscheinlichkeit, die das Vorhandensein des Merkmals anzeigt, Bereitstellen einer Angabe darüber, ob das eine oder die mehreren der Vielzahl der Audiosignale (104-1, 104-2) für die Anwendung (132-1, 132-2, 232-1, 232-2) relevant ist;
**dadurch gekennzeichnet, dass** die Ausführung der Befehle bewirkt, dass die Steuerschaltung (214) ferner:
eine Vielzahl von Wahrscheinlichkeiten für das Vorhandensein eines Merkmals in der Vielzahl von Audioströmen (122-1, 122-2, 201) erhält;
falls die Vielzahl der Wahrscheinlichkeiten für das Vorhandensein des Merkmals anzeigt, dass das Merkmal vorhanden ist, die empfangenen Relevanzinformationen mit den in der Vielzahl von Audioströmen (122-1, 122-2, 201) vorhandenen Merkmalen vergleicht;
feststellt, ob einer oder mehrere der Vielzahl von Audioströmen (122-1, 122-2, 201) für eine bestimmte Anwendung (132-1, 132-2, 232-1, 232-2) relevant sind;
feststellt, ob eine Audioquelle (A, B), die dem einen oder den mehreren der Vielzahl von Audioströmen (122-1, 122-2, 201) zugeordnet ist, für die bestimmte Anwendung (132-1, 132-2, 232-1, 232-2) relevant ist; und
als Reaktion darauf, dass der eine oder die mehreren der Vielzahl von Audioströmen (122-1, 122-2, 201) oder die Audioquelle (A, B) für die bestimmte Anwendung (132-1, 132-2, 232-1, 232-2) relevant sind, dem einen oder den mehreren der Vielzahl von Audioströmen (122-1, 122-2, 201) der jeweiligen Anwendung (132-1, 132-2, 232-1, 232-2) bereitstellt.

2. Integrierte Schaltung nach Anspruch 1, wobei als Reaktion darauf, dass die Wahrscheinlichkeit größer als eine Schwellenwahrscheinlichkeit ist, festgestellt wird, dass das Merkmal in der Vielzahl von Audioströmen (122-1, 122-2, 201) vorhanden ist.

3. Integrierte Schaltung nach einem vorstehenden Anspruch, ferner umfassend:
ein Modul (218) zur Vorhersage gesprochener Sprache und zur Berechnung der Sprachwahrscheinlichkeit, das so konfiguriert ist, dass es die Wahrscheinlichkeit des Merkmals und separat die Wahrscheinlichkeit eines zusätzlichen Merkmals bestimmt, das in der Vielzahl von Audioströmen (122-1, 122-2, 201) vorhanden ist;
und
das Merkmal Sprache umfasst.

4. Integrierte Schaltung nach einem vorstehenden Anspruch, wobei:
die Anwendung (132-1, 132-2, 232-1, 232-2) eine automatische Spracherkennung umfasst; und
die Sprache einen Befehl oder eine Abfrage umfasst.

5. Integrierte Schaltung nach einem vorstehenden Anspruch, ferner umfassend:
ein Modul (220) zur Berechnung der Relevanzwahrscheinlichkeit, das so konfiguriert ist, dass es die Wahrscheinlichkeit ermittelt, mit der das Merkmal in der Vielzahl von Audioströmen (122-1, 122-2, 201) vorhanden ist;
wobei das Modul (220) zur Berechnung der Relevanzwahrscheinlichkeit so konfiguriert ist, dass es zwischen einer für eine Anwendung (132-1, 132-2, 232-1, 232-2) und anderer allgemeiner Sprache unterscheidet; und/oder
wobei das Modul (220) zur Berechnung der Relevanzwahrscheinlichkeit so konfiguriert ist, dass es ermittelt, ob die Absicht besteht, eine bestimmte Anwendung (132-1, 132-2, 232-1, 232-2) anzusprechen.

6. Integrierte Schaltung nach einem vorstehenden Anspruch, ferner umfassend:
ein Modul (216) zur Berechnung der Stillewahrscheinlichkeit, das so konfiguriert ist, dass es die Vielzahl von Audioströmen (122-1, 122-2, 201) empfängt und eine Stillewahrscheinlichkeit ermittelt, indem es zwischen Hintergrundrauschen und dem Vorhandensein von Ton unterscheidet, und dass es die Wahrscheinlichkeit des Merkmals ermittelt, das in der Vielzahl von Audioströmen (122-1, 122-2, 201) vorliegt.

7. Integrierte Schaltung nach Anspruch 6, ferner umfassend:
ein Quellenauswahlmodul (230), das ein Modul (222) zur Aggregation von Relevanzfaktoren enthält, das so konfiguriert ist, dass es bestimmt, ob die Vielzahl von Audioströmen (122-1, 122-2, 201) durch Rückkopplung von einem Lautsprecher verursacht wird oder nicht; und
für den Fall, dass die Vielzahl von Audioströmen (122-1, 122-2, 201) durch Rückkopplung von einem Lautsprecher verursacht wird,
das Modul (222) zur Aggregation von Relevanzfaktoren so konfiguriert wird, dass es der Rückkopplung eine geringe Gewichtung zuweist.

8. Integrierte Schaltung nach einem vorstehenden Anspruch, wobei:
die Ausführung der Befehle die Steuerschaltung (214) ferner veranlasst, unter Verwendung des Mikrofonarrays (102-1, 102-2) eine Richtung (224) der Audiosignale (104-1, 104-2) zu erhalten,
und
die Richtung (224) einen Winkel in Bezug auf das Mikrofonarray (102-1, 102-2) umfasst.

9. Integrierte Schaltung nach einem vorstehenden Anspruch, wobei die Ausführung der Befehle die Steuerschaltung (214) ferner veranlasst:
eine zweite Wahrscheinlichkeit für ein zweites Merkmal zu erhalten, das in den Audiosignalen (104-1, 104-2) vorhanden ist, wobei sich das zweite Merkmal von dem Merkmal unterscheidet,
eine zweite Relevanzinformation in Bezug auf die Anwendung (132-1, 132-2, 232-1, 232-2) zu erhalten; und
als Reaktion darauf, dass die zweite Wahrscheinlichkeit das Vorhandensein des zweiten Merkmals anzeigt, auf der Grundlage eines zweiten Vergleichs zwischen dem zweiten Merkmal und den zweiten Relevanzinformationen die Angabe darüber bereitzustellen, ob die Audiosignale (104-1, 104-2) für die Anwendung (132-1, 132-2, 232-1, 232-2) relevant sind.

10. Integrierte Schaltung nach einem vorstehenden Anspruch, wobei die Ausführung der Befehle ferner bewirkt, dass die Steuerschaltung (214) die Angabe an ein Stromauswahlmodul (226) übermittelt, das so konfiguriert ist, dass es die Audiosignale (104-1, 104-2) der Anwendung (132-1, 132-2, 232-1, 232-2) zuordnet.

11. Integrierte Schaltung nach Anspruch 10, sofern von Anspruch 7 abhängig, wobei:
das Modul (222) zur Aggregation von Relevanzfaktoren ferner so konfiguriert ist, dass es Wahrscheinlichkeitsinformationen von jedem von Modul (216) zur Berechnung der Stillewahrscheinlichkeit, Modul (218) zur Vorhersage der gesprochenen Sprache und zur Berechnung der Sprachwahrscheinlichkeit sowie von Modul (220) zur Berechnung der Relevanzwahrscheinlichkeit empfängt; wobei
das Modul (222) zur Aggregation von Relevanzfaktoren so konfiguriert ist, dass es auf der Grundlage der empfangenen Informationen eine gewichtete Summe der Wahrscheinlichkeiten oder eine durchschnittliche Wahrscheinlichkeit aus den empfangenen Wahrscheinlichkeiten ermittelt, um zu bestimmen, ob jeder der multiplen Audioströme (122-1, 122-2, 201) für eine bestimmte Anwendung (132-1, 132-2, 232-1, 232-2) relevant ist, und dem Strom-Auswahlmodul (226) den Audiostrom (122-1, 122-2, 201) anzuzeigen, für den die jeweilige Anwendung (132-1, 132-2, 232-1, 232-2) relevant ist.

12. Integrierte Schaltung nach einem vorstehenden Anspruch, wobei die Ausführung der Befehle die Steuerschaltung (214) ferner veranlasst, Rückkopplung in Bezug auf die Echostärke aus einer Audiodatei zu unterdrücken, die über einen Lautsprecher der elektronischen Vorrichtung (500) wiedergegeben wird.

13. Integrierte Schaltung nach einem vorstehenden Anspruch, ferner umfassend:
einen Gewichtungsauswahlprozessor (320), der so konfiguriert ist, dass er Gewichtungsfaktoren auswählt, die auf die Wahrscheinlichkeit des Vorhandenseins eines Merkmals in der Vielzahl von Audioströmen (122-1, 122-2, 201) anzuwenden sind, basierend auf einem Echostärkesignal (305) und einer Anwendungsidentifikation (307).

14. Computerimplementiertes Verfahren, umfassend:
Erhalten einer Vielzahl von Audioströmen (122-1, 122-2, 201) aus multiplen Audiosignalen (104-1, 104-2);
Erhalten einer Wahrscheinlichkeit für das Vorhandensein eines Audio-Merkmals in einem oder mehreren der Vielzahl von Audioströmen (122-1, 122-2, 201);
Erhalten von Relevanzinformationen in Bezug auf eine Anwendung (132-1, 132-2, 232-1, 232-2) darüber, wie viel Relevanz oder wie viel Gewicht dem Merkmal beizumessen ist; als Reaktion auf die Wahrscheinlichkeit, die anzeigt, dass das Merkmal vorhanden ist, Bestimmen, ob der eine oder die mehreren der Vielzahl von Audioströmen (122-1, 122-2, 201) für die Anwendung (132-1, 132-2, 232-1, 232-2) relevant ist; **gekennzeichnet durch** Erhalten einer Vielzahl von Wahrscheinlichkeiten für das Vorhandensein eines Merkmals in der Vielzahl von Audioströmen (122-1, 122-2, 201); wobei
falls die Vielzahl von Wahrscheinlichkeiten für das Vorhandensein des Merkmals anzeigt, dass das Merkmal vorhanden ist, Vergleichen der empfangenen Relevanzinformationen mit den in der Vielzahl von Audioströmen (122-1, 122-2, 201) vorhandenen Merkmalen;
Ermitteln, ob der eine oder die mehreren der Vielzahl von Audioströmen (122-1, 122-2, 201) für eine bestimmte Anwendung (132-1, 132-2, 232-1, 232-2) relevant sind;
Ermitteln, ob eine mit dem einen oder den mehreren der Vielzahl von Audioströmen (122-1, 122-2, 201) verbundene Audioquelle (A, B) für eine bestimmte Anwendung (132-1, 132-2, 232-1, 232-2) relevant ist; und
als Reaktion darauf, dass der eine oder die mehreren der Vielzahl von Audioströmen (122-1, 122-2, 201) oder die Audioquelle (A, B) für die bestimmte Anwendung (132-1, 132-2, 232-1, 232-2) relevant sind, Bereitstellen des einen oder der mehreren der Vielzahl von Audioströmen (122-1, 122-2, 201) für die bestimmte Anwendung (132-1, 132-2, 232-1, 232-2).

15. Computerimplementiertes Verfahren nach Anspruch 14, ferner umfassend:
Erhalten einer zweiten Wahrscheinlichkeit für das Vorhandensein eines zweiten Merkmals in der Vielzahl von Audioströmen (122-1, 122-2, 201);
Erhalten einer dritten Wahrscheinlichkeit für das Vorhandensein eines dritten Merkmals in der Vielzahl von Audioströmen (122-1, 122-2, 201); und
als Reaktion darauf, dass das zweite Merkmal und das dritte Merkmal vorhanden sind und die Vielzahl von Audioströmen (122-1, 122-2, 201) für die Anwendung (132-1, 132-2, 232-1, 232-2) relevant sind, Bereitstellen des Audiostroms (122-1, 122-2, 201) für die Anwendung (132-1, 132-2, 232-1, 232-2).

## Revendications

1. Circuit intégré pour un dispositif électronique (500), le circuit intégré comprenant :
une mémoire (212, 570) qui stocke des instructions ; et
une circuiterie de commande (214) couplée à la mémoire (212, 570), dans lequel l'exécution des instructions amène la circuiterie de commande (214) à :
obtenir, à partir d'un réseau de microphones (102-1, 102-2), de multiples signaux audio (104-1, 104-2) ;
obtenir, à partir des multiples signaux audio (104-1, 104-2), une pluralité de flux audio (122-1, 122-2, 201) ;
obtenir une probabilité de présence d'une caractéristique audio dans un ou plusieurs des multiples signaux audio (104-1, 104-2) ;
obtenir des informations de pertinence relatives à une application (132-1, 132-2, 232-1, 232-2) indiquant le degré de pertinence ou le poids à attribuer à la caractéristique ; et
en réponse à la probabilité indiquant la présence de la caractéristique, fournir une indication indiquant si les un ou plusieurs signaux parmi ladite pluralité de signaux audio (104-1, 104-2) sont pertinents pour l'application (132-1, 132-2, 232-1, 232-2) ;
**caractérisé en ce que** l'exécution des instructions amène en outre la circuiterie de commande (214) à :
obtenir une pluralité de probabilités de présence d'une caractéristique dans la pluralité de flux audio (122-1, 122-2, 201) ;
si la pluralité de probabilités de présence de la caractéristique indique que la caractéristique est présente, comparer les informations de pertinence reçues aux caractéristiques présentes dans la pluralité de flux audio (122-1, 122-2, 201) ;
déterminer si un ou plusieurs flux parmi la pluralité de flux audio (122-1, 122-2, 201) sont pertinents pour une application particulière (132-1, 132-2, 232-1, 232-2) ;
déterminer si une source audio (A, B) associée aux un ou plusieurs flux parmi ladite pluralité de flux audio (122-1, 122-2, 201) est pertinente pour l'application particulière (132-1, 132-2, 232-1, 232-2) ; et
en réponse à la détermination selon laquelle les un ou plusieurs flux parmi ladite pluralité de flux audio (122-1, 122-2, 201) ou la source audio (A, B) sont pertinents pour l'application particulière (132-1, 132-2, 232-1, 232-2), fournir les un ou plusieurs flux parmi ladite pluralité de flux audio (122-1, 122-2, 201) à l'application particulière (132-1, 132-2, 232-1, 232-2).

2. Circuit intégré selon la revendication 1, dans lequel en réponse à la probabilité étant supérieure à une probabilité seuil, il est déterminé que la caractéristique est présente dans la pluralité de flux audio (122-1, 122-2, 201).

3. Circuit intégré selon l'une quelconque des revendications précédentes, comprenant en outre :
un module de prédiction de la langue parlée et de calcul de la probabilité de parole (218) configuré pour déterminer la probabilité de la caractéristique, et séparément, la probabilité d'une caractéristique supplémentaire présente dans la pluralité de flux audio (122-1, 122-2, 201) ;
et
la caractéristique comprend de la parole.

4. Circuit intégré selon l'une quelconque des revendications précédentes, dans lequel :
l'application (132-1, 132-2, 232-1, 232-2) comprend une reconnaissance automatique de la parole ; et la parole comprend une commande ou une requête.

5. Circuit intégré selon l'une quelconque des revendications précédentes, comprenant en outre :
un module de calcul de la probabilité de pertinence (220) configuré pour déterminer la probabilité que la caractéristique soit présente dans la pluralité de flux audio (122-1, 122-2, 201) ;
le module de calcul de la probabilité de pertinence (220) étant configuré pour distinguer une langue adaptée à une application (132-1, 132-2, 232-1, 232-2) d'une autre langue à usage général ; et/ou
le module de calcul de la probabilité de pertinence (220) étant configuré pour déterminer s'il existe une intention que la parole soit destinée à une application particulière (132-1, 132-2, 232-1, 232-2).

6. Circuit intégré selon l'une quelconque des revendications précédentes, comprenant en outre :
un module de calcul de la probabilité de silence (216) configuré pour recevoir la pluralité de flux audio (122-1, 122-2, 201) et déterminer une probabilité de silence en faisant la distinction entre le bruit de fond et la présence d'un son et pour déterminer la probabilité que la caractéristique soit présente dans la pluralité de flux audio (122-1, 122-2, 201).

7. Circuit intégré selon la revendication 6, comprenant en outre :
un module de sélection de source (230) comprenant un module d'agrégation de facteurs de pertinence (222) configuré pour déterminer si la pluralité de flux audio (122-1, 122-2, 201) est générée par un retour provenant d'un haut-parleur, ou non ; et dans le cas où la pluralité de flux audio (122-1, 122-2, 201) est générée par un retour provenant d'un haut-parleur, le module d'agrégation de facteurs de pertinence (222) est configuré pour attribuer un faible poids audit retour.

8. Circuit intégré selon l'une quelconque des revendications précédentes, dans lequel :
l'exécution des instructions amène en outre la circuiterie de commande (214) à obtenir, à l'aide du réseau de microphones (102-1, 102-2), une direction (224) des signaux audio (104-1, 104-2), et la direction (224) comprend un angle par rapport au réseau de microphones (102-1, 102-2).

9. Circuit intégré selon l'une quelconque des revendications précédentes, dans lequel l'exécution des instructions amène en outre la circuiterie de commande (214) à :
obtenir une deuxième probabilité qu'une deuxième caractéristique soit présente dans les signaux audio (104-1, 104-2), la deuxième caractéristique étant différente de ladite caractéristique,
obtenir une deuxième information de pertinence relative à l'application (132-1, 132-2, 232-1, 232-2) ; et
en réponse au fait que la deuxième probabilité indique la présence de la deuxième caractéristique, fournir l'indication selon laquelle les signaux audio (104-1, 104-2) sont pertinents pour l'application (132-1, 132-2, 232-1, 232-2) sur la base d'une deuxième comparaison entre la deuxième caractéristique et la deuxième information de pertinence.

10. Circuit intégré selon l'une quelconque des revendications précédentes, dans lequel l'exécution des instructions amène en outre la circuiterie de commande (214) à fournir l'indication à un module de sélection de flux (226) configuré pour associer les signaux audio (104-1, 104-2) à l'application (132-1, 132-2, 232-1, 232-2).

11. Circuit intégré selon la revendication 10, lorsqu'elle dépend de la revendication 7, dans lequel :
le module d'agrégation de facteurs de pertinence (222) est en outre configuré pour recevoir des informations de probabilité provenant de chacun du module de calcul de la probabilité de silence (216), du module de prédiction de la langue parlée et de calcul de la probabilité de parole (218) et du module de calcul de la probabilité de pertinence (220) ; dans lequel :
le module d'agrégation de facteurs de pertinence (222) est configuré pour déterminer, sur la base des informations reçues, une somme pondérée de probabilités ou une probabilité moyenne à partir des probabilités reçues, pour déterminer si chacun des multiples flux audio (122-1, 122-2, 201) est pertinent pour une application particulière (132-1, 132-2, 232-1, 232-2), et pour indiquer au module de sélection de flux (226) lequel des flux audio (122-1, 122-2, 201) est pertinent pour l'application particulière (132-1, 132-2, 232-1, 232-2).

12. Circuit intégré selon l'une quelconque des revendications précédentes, dans lequel l'exécution des instructions amène en outre la circuiterie de commande (214) à annuler un retour lié à l'intensité de l'écho provenant d'un fichier audio diffusé sur un haut-parleur du dispositif électronique (500).

13. Circuit intégré selon l'une quelconque des revendications précédentes, comprenant en outre :
un processeur de sélection de pondération (320) configuré pour sélectionner des facteurs de pondération, destinés à être appliqués à la probabilité de présence d'une caractéristique dans la pluralité de flux audio (122-1, 122-2, 201), sur la base d'un signal d'intensité d'écho (305) et d'une identification d'application (307).

14. Procédé mis en œuvre par ordinateur comprenant :
l'obtention, à partir de multiples signaux audio (104-1, 104-2), d'une pluralité de flux audio (122-1, 122-2, 201) ;
l'obtention d'une probabilité de présence d'une caractéristique audio dans un ou plusieurs flux de la pluralité de flux audio (122-1, 122-2, 201) ;
l'obtention d'informations de pertinence relatives à une application (132-1, 132-2, 232-1, 232-2) indiquant le degré de pertinence ou le poids à attribuer à la caractéristique ;
en réponse à la probabilité indiquant la présence de la caractéristique, la détermination si les un ou plusieurs flux parmi ladite pluralité de flux audio (122-1, 122-2, 201) sont pertinents pour l'application (132-1, 132-2, 232-1, 232-2) ; **caractérisé par**
l'obtention d'une pluralité de probabilités de présence d'une caractéristique dans la pluralité de flux audio (122-1, 122-2, 201) ; dans lequel
si la pluralité de probabilités de présence de la caractéristique indique que la caractéristique est présente, la comparaison des informations de pertinence reçues avec les caractéristiques présentes dans la pluralité de flux audio (122-1, 122-2, 201) ;
la détermination de la pertinence des un ou plusieurs flux parmi ladite pluralité de flux audio (122-1, 122-2, 201) pour une application particulière (132-1, 132-2, 232-1, 232-2) ;
la détermination de la pertinence d'une source audio (A, B) associée aux un ou plusieurs flux parmi ladite pluralité de flux audio (122-1, 122-2, 201) pour une application particulière (132-1, 132-2, 232-1, 232-2) ; et
en réponse à la détermination selon laquelle les un ou plusieurs flux parmi ladite pluralité de flux audio (122-1, 122-2, 201) ou la source audio (A, B) sont pertinents pour l'application particulière (132-1, 132-2, 232-1, 232-2), la fourniture des un ou plusieurs flux parmi ladite pluralité de flux audio (122-1, 122-2, 201) à l'application particulière (132-1, 132-2, 232-1, 232-2).

15. Procédé mis en œuvre par ordinateur selon la revendication 14, comprenant en outre :
l'obtention d'une deuxième probabilité de présence d'une deuxième caractéristique dans la pluralité de flux audio (122-1, 122-2, 201) ;
l'obtention d'une troisième probabilité de présence d'une troisième caractéristique dans la pluralité de flux audio (122-1, 122-2, 201) ; et
en réponse à la présence de la deuxième caractéristique et de la troisième caractéristique et au fait que la pluralité de flux audio (122-1, 122-2, 201) est pertinente pour l'application (132-1, 132-2, 232-1, 232-2), la fourniture du flux audio (122-1, 122-2, 201) à l'application (132-1, 132-2, 232-1, 232-2).
